# DEMANDE DE BREVET EUROPEEN

(11) **EP 1 843 531 A1**
(43) Date de publication de la demande: **10.10.2007**
(21) Numéro de dépôt: 07105466.2
(22) Date de dépôt: 02.04.2007
(51) Int. Cl.: H04L 12/56

(54) **Procédé de routage distribué multichemin**

(30) Priorité: 03.04.2006 FR 0602901
(71) Demandeur: Alcatel Lucent, 75008 Paris (FR)
(72) Inventeur: Randriamasy, Claire-Sabine, 92190, MEUDON (FR); Fournie, Laurent, 75012, PARIS (FR); Hong, Dohy, 94120, FONTENAY SOUS BOIS (FR)
(74) Mandataire: Sciaux, Edmond

(57) **Abrégé**

Ce procédé consiste à :
- dans un premier routeur (R2) qui a décidé de passer d'un routage mono-chemin sur un chemin (R2-R4-R5) dit par défaut à un routage multichemin, à envoyer une instruction dite de déviation, à lui-même et aux routeurs (R3, R4) situés sur un chemin alternatif (R2-R3-R8-R5) cette instruction leur indiquant au moins une identité de flux qui doit être dévié, et ce chemin alternatif (R2-R3-R8-R5), ce chemin alternatif devant être utilisé respectivement pour tous les flux ainsi identifiés, et n'envoyer aucune instruction concernant les flux qui doivent rester sur le chemin par défaut ;
- dans chaque routeur destinataire (R3), à enregistrer chaque instruction de déviation reçue, et exécuter une instruction sélectionnée parmi toutes les instructions enregistrées, cette instruction étant sélectionnée selon au moins une règle de priorité commune pour tous les routeurs du réseau, l'exécution des instructions de déviation étant synchronisée dans tous les noeuds du réseau, et cette exécution consistant à générer des informations de routage et les inscrire dans la table de routage du routeur considéré.

## Description

L'invention concerne les réseaux de communication, à commutation de flux de paquets, et plus précisément un procédé de routage distribué et multichemin; ainsi qu'un routeur pour la mise en oeuvre de ce procédé. Un tel procédé permet soit d'améliorer la robustesse du réseau en cas d'augmentation du trafic, soit d'allouer moins de ressources pour constituer des liens, pour une qualité de service donnée.

De façon très schématique, un réseau de communication peut être réduit à des routeurs, connectés les uns aux autres par des liens. Quand un routeur reçoit un paquet de données sur un de ses ports, il le mémorise temporairement puis le réémet à partir d'un autre port choisi de telle façon qu'il permet à ce paquet d'atteindre sa destination finale, après avoir transité éventuellement à travers d'autres routeurs. Chaque routeur possède une table, dite de routage, qui lui permet de choisir le port de retransmission pour chaque paquet, en fonction notamment de sa destination finale.

Dans de tels réseaux, l'opération de routage consiste à calculer au niveau des routeurs, ou du réseau, le chemin (ou « path » en anglais) que chaque flux de données va devoir suivre pour parvenir au niveau de sa destination finale, éventuellement à moindre coût. Un tel chemin est constitué d'une séquence ordonnée de liens ou « sauts » (« hops » en anglais) établis entre des paires de routeurs voisins (ou consécutifs), entre un routeur source et un routeur de destination. Ces chemins sont généralement déterminés de manière à supporter le trafic, en fonction d'au moins un critère (avec ou sans contrainte(s)), comme par exemple la bande passante disponible, le nombre de liens, le coût administratif, et le temps de transit.

Afin qu'un lien puisse supporter une surcharge de trafic induite par une rafale passagère, il est par exemple possible de sur-dimensionner la capacité qui lui est allouée. C'est notamment ce que l'on fait dans le cas d'un routage reposant sur un unique chemin (« monochemin » en français,« Single-Path » en anglais).

Il est également possible de modifier la répartition de la charge en mettant en oeuvre un routage de type multichemin (ou MP pour « Multiple-Path » en anglais) en prévoyant pour certains chemins, définis chacun entre un routeur source et un routeur de destination, au moins un chemin disjoint alternatif, défini entre ces mêmes routeurs source et de destination. Dans ce cas, on définit pour chaque chemin un seuil de trafic au-delà duquel on considère qu'il y a surcharge de trafic, et en cas de détection d'un dépassement de seuil on transfère progressivement la surcharge de trafic vers au moins un chemin alternatif au moins partiellement disjoint. Ce type de routage multichemin permet de faire une répartition de charge (ou « load balancing » en anglais) destinée à répartir le trafic au sein du réseau et/ou anticiper les surcharges de lien(s), et donc de router plus de trafic et de mieux dimensionner le réseau.

La fonction de routage est généralement distribuée dans tous les routeurs d'un réseau, ce qui permet à chaque routeur de réagir rapidement lorsqu'un risque de surcharge apparaît sur un lien partant ce routeur. Lorsqu'un routage de type multichemin et distribué est réalisable dans une pluralité de routeurs d'un réseau, le passage du routage monochemin au routage multichemin peut être décidé par plusieurs routeurs au même moment. Il peut y avoir alors création de déviations indésirables, et de boucles, notamment si le routage et la retransmission des paquets sont basés sur l'adresse de destination contenue dans chaque paquet de données. Les déviations indésirables sont nuisibles à l'optimisation de l'utilisation des ressources, et les boucles provoquent la perte de paquets de données. Ces problèmes seront illustrés dans ce qui suit.

Des procédés de routage multichemin et distribué sont décrits notamment dans:
- "Measurement Based Optimal Multi-path Routing", T. GÜVEN et al., INFOCOM 2004 : Il s'agit d'un procédé où le routage d'un flux de paquet est simplement fonction de l'identité du flux et de l'identité du routeur de destination. Les traitements à réaliser avant de retransmettre chaque paquet de données sont simples, mais ce procédé ne garantie pas la cohérence entre les instructions de routage reçues par un routeur donné, pour un flux donné et une destination donnée. Si un routeur reçoit des instructions différentes, voire contradictoires, pour un flux donné et une destination donnée, cela peut causer des déviations indésirables ou des boucles.
- "An approach for routing at the flow level", C. PROUST, IETF Draft, Network Working group, February 2004. Ce procédé connu garantie la cohérence des instructions données à chaque routeur. Cependant il a l'inconvénient d'utiliser, dans chaque routeur, une table de routage à trois dimensions, dont la taille devient rapidement prohibitive quand le nombre de routeurs augmente.
- "A Traffic Engineering Approach based on Minimum-Delay Routing", S. VUTUKURI and J.J. GARCIA-LUNA-ACEVES, ICCN 2000. Il s'agit d'un procédé où le routage est fonction de l'identité du flux, de l'identité du routeur de destination, et d'une indiquant une destination virtuelle. Ce procédé connu garantie la cohérence des instructions données à chaque routeur. Mais il a l'inconvénient de nécessiter de marquer chaque paquet au moyen d'une en-tête supplémentaire, et de nécessiter des traitements complexes avant de retransmettre chaque paquet de données.
- "OSPF-OMP Optimized Multipath", C. VILLAMIZAR, IETF draft, draft-ietf-ospf-omp-03, January 2002, http://www.fictitious.org/ospf-omp/ospf-omp.pdf : Il s'agit d'un procédé où le routage est fonction de l'identité du flux, de l'identité du routeur de destination, et d'une clé qui est attachée à chaque paquet. Ce procédé connu garantie la cohérence des instructions données à chaque routeur. Mais il a l'inconvénient de nécessiter de marquer chaque paquet au moyen d'une clé, et de nécessiter des traitements complexes avant de retransmettre chaque paquet de données.

Le but de l'invention est de proposer un procédé de routage multichemin et distribué qui garantisse la cohérence des instructions données à chaque routeur, sans nécessiter des traitements complexes avant de retransmettre chaque paquet de données.

Un premier objet de l'invention est un procédé de routage distribué multichemin, sur des liens entre des routeurs d'un réseau de télécommunication, une pluralité de ces routeurs comportant des moyens pour décider de passer d'un routage mono-chemin à un routage multichemin ; caractérisé en ce qu'il consiste :
- dans un premier routeur qui a décidé de passer d'un routage mono-chemin sur un chemin dit par défaut à un routage multichemin, sur au moins un chemin alternatif au moins partiellement disjoint du chemin par défaut, et reliant le premier routeur à un routeur dit de destination, pour acheminer des flux de paquets de données de ce premier routeur vers ce routeur de destination, à envoyer une instruction dite de déviation, à lui-même et aux routeurs situés sur un chemin alternatif cette instruction leur indiquant au moins une identité de flux qui doit être dévié, et ce chemin alternatif, ce chemin alternatif devant être utilisé respectivement pour tous les flux ainsi identifiés, et n'envoyer aucune instruction concernant les flux qui doivent rester sur le chemin par défaut ;
- dans chaque routeur destinataire, à enregistrer chaque instruction de déviation reçue, et exécuter une instruction sélectionnée parmi toutes les instructions enregistrées, cette instruction étant sélectionnée selon au moins une règle de priorité commune pour tous les routeurs du réseau, l'exécution des instructions de déviation étant synchronisée dans tous les noeuds du réseau, et cette exécution consistant à générer des informations de routage et les inscrire dans la table de routage du routeur considéré.

Le procédé ainsi caractérisé permet d'éviter des déviations indésirables et des boucles grâce au fait qu'il consiste à enregistrer les différentes instructions de déviation reçues par un routeur, et à sélectionner une instruction de déviation, parmi plusieurs instructions concurrentes qui ont été enregistrées, selon au moins une règle de priorité commune pour tous les routeurs du réseau.

Il présente l'avantage de pouvoir être mis en oeuvre avec des tables de routage à deux dimensions seulement, et de ne pas nécessiter un marquage des paquets de données, qui est toujours coûteux en temps de traitement.

Il est particulièrement utile pour dévier une faible partie du trafic d'un lien dans le but d'éviter la surcharge de ce lien.

Selon un mode mise en oeuvre préférentiel, chaque instruction de déviation contient la date d'émission de cette instruction, et la date d'une alarme qui a déclenché l'émission de cette instruction.

Selon une première variante de mise en oeuvre préférentiel, pour sélectionner une instruction de déviation selon au moins une règle de priorité commune pour tous les routeurs du réseau, il consiste à :
-- sélectionner l'instruction de déviation qui a la date d'émission la plus récente ;
-- ou si plusieurs instruction de déviation ont la même date d'émission, sélectionner l'instruction de déviation qui a la date d'alarme la plus récente ;
-- ou si plusieurs instruction de déviation ont la même date d'émission, et la même date d'alarme, sélectionner l'instruction de déviation qui vient du routeur le plus proche du routeur de destination ;
-- ou si plusieurs instruction de déviation ont la même date d'émission, ont la même date d'alarme, et viennent de routeurs qui sont à une même distance du routeur de destination, alors sélectionner l'instruction qui contient une identité de routeur émetteur d'instruction de déviation, telle que cette identité a un certain ordre lexical.

Selon une seconde variante de mise en oeuvre préférentiel, pour sélectionner une instruction selon au moins une règle de priorité commune pour tous les routeurs du réseau, il consiste à sélectionner l'instruction de routage telle que la distance, mesurée en nombre de sauts, entre le noeud considéré et le noeud de destination, sur le chemin alternatif mentionné dans cette instruction, est la plus courte ;
et ensuite, si la règle précédente ne suffit pas à sélectionner une instruction, il consiste à :
-- sélectionner l'instruction de déviation qui a la date d'émission la plus récente ;
-- ou si plusieurs instruction de déviation ont la même date d'émission, sélectionner l'instruction de déviation qui a la date d'alarme la plus récente ;
-- ou si plusieurs instruction de déviation ont la même date d'émission, et la même date d'alarme, sélectionner l'instruction de déviation qui vient du routeur le plus proche du routeur de destination ;
-- ou si plusieurs instruction de déviation ont la même date d'émission, ont la même date d'alarme, et viennent de routeurs qui sont à une même distance du routeur de destination, alors sélectionner l'instruction qui contient une identité de routeur émetteur d'instruction de déviation, telle que cette identité a un certain ordre lexical.

Selon un mode de réalisation préférentiel, il consiste en outre:
- dans un premier routeur qui a décidé de revenir d'un routage multichemin sur un chemin alternatif à un routage mono-chemin sur un chemin par défaut, à envoyer une instruction à lui-même et aux routeurs situés sur ce chemin alternatif cette instruction leur indiquant au moins une identité de flux qui doit être ramené sur le chemin par défaut, et l'identité du chemin alternatif concerné ;
- dans chaque routeur destinataire, exécuter cette instruction de retour en modifiant dans leurs tables de routage les informations de routage correspondantes, l'exécution des instructions de retour étant prioritaire par rapport à l'exécution des instructions de déviation.

L'invention a aussi pour objet un routeur pour la mise en oeuvre du procédé selon l'invention. Il est caractérisé en ce qu'il comprend des moyens de calcul agencés pour :
- passer d'un routage mono-chemin sur un chemin dit par défaut à un routage multichemin, sur au moins un chemin alternatif au moins partiellement disjoint du chemin par défaut, et reliant le premier routeur à un routeur dit de destination, pour acheminer des flux de paquets de données de ce premier routeur vers ce routeur de destination, à envoyer une instruction dite de déviation, à lui-même et aux routeurs situés sur un chemin alternatif cette instruction leur indiquant au moins une identité de flux qui doit être dévié, et ce chemin alternatif , ce chemin alternatif devant être utilisé respectivement pour tous les flux ainsi identifiés, et n'envoyer aucune instruction concernant les flux qui doivent rester sur le chemin par défaut ;
- à enregistrer chaque instruction de déviation reçue, et exécuter une instruction sélectionnée parmi toutes les instructions enregistrées, cette instruction étant sélectionnée selon au moins une règle de priorité commune pour tous les routeurs du réseau, l'exécution des instructions de déviation étant synchronisée dans tous les noeuds du réseau, et cette exécution consistant à générer des informations de routage et les inscrire dans la table de routage du routeur considéré.

Selon un mode de réalisation préférentiel, lesdits moyens de calcul sont agencés pour que chaque instruction de déviation contienne la date d'émission de cette instruction, et la date d'une alarme qui a déclenché l'émission de cette instruction.

Selon une première variante, lesdits moyens de calcul sont agencés pour :
-- sélectionner l'instruction de déviation qui a la date d'émission la plus récente ;
-- ou si plusieurs instruction de déviation ont la même date d'émission, sélectionner l'instruction de déviation qui a la date d'alarme la plus récente ;
-- ou si plusieurs instruction de déviation ont la même date d'émission, et la même date d'alarme, sélectionner l'instruction de déviation qui vient du routeur le plus proche du routeur de destination ;
-- ou si plusieurs instruction de déviation ont la même date d'émission, ont la même date d'alarme, et viennent de routeurs qui sont à une même distance du routeur de destination, alors sélectionner l'instruction qui contient une identité de routeur émetteur d'instruction de déviation, telle que cette identité a un certain ordre lexical.

Selon une seconde variante, lesdits moyens de calcul sont agencés pour sélectionner l'instruction de routage telle que la distance, mesurée en nombre de sauts, entre le noeud considéré et le noeud de destination, sur le chemin alternatif mentionné dans cette instruction, est la plus courte ;
et ensuite, si la règle précédente ne suffit pas à sélectionner une instruction, pour :
-- sélectionner l'instruction de déviation qui a la date d'émission la plus récente ;
-- ou si plusieurs instruction de déviation ont la même date d'émission, sélectionner l'instruction de déviation qui a la date d'alarme la plus récente ;
-- ou si plusieurs instruction de déviation ont la même date d'émission, et la même date d'alarme, sélectionner l'instruction de déviation qui vient du routeur le plus proche du routeur de destination ;
-- ou si plusieurs instruction de déviation ont la même date d'émission, ont la même date d'alarme, et viennent de routeurs qui sont à une même distance du routeur de destination, alors sélectionner l'instruction qui contient une identité de routeur émetteur d'instruction de déviation, telle que cette identité a un certain ordre lexical.

Selon un mode de réalisation préférentiel, lesdits moyens de calcul sont agencés pour :
- si ce routeur a décidé de revenir d'un routage multichemin sur un chemin alternatif à un routage mono-chemin sur un chemin par défaut, envoyer une instruction à lui-même et aux routeurs situés sur ce chemin alternatif cette instruction leur indiquant au moins une identité de flux qui doit être ramené sur le chemin par défaut, et l'identité du chemin alternatif concerné;
- si ce routeur reçoit une instruction de déviation, exécuter cette instruction de retour en modifiant dans ses tables de routage les informations de routage correspondantes, l'exécution des instructions de retour étant prioritaire par rapport à l'exécution des instructions de déviation.

L'invention est particulièrement bien adaptée, bien que de façon non exclusive, aux réseaux de communication à protocole Internet (appelé aussi « IP »). Elle peut aussi être appliquée aux réseaux à plan de contrôle MPLS (« MultiProtocol Label Switching » - commutation d'étiquettes) ou GMPLS (« Generalized MPLS »). Elle est applicable sans difficultés aux réseaux ayant un grand nombre de routeurs.

L'invention sera mieux comprise et d'autres caractéristiques apparaîtront à l'aide de la description ci-dessous et des figures l'accompagnant :
- La figure 1 illustre le problème de cohérence de décisions qui peut se poser avec les procédés connus de routage distribué et multichemin.
- La figure 2 illustre le problème de répartition de charge qui peut se poser avec les procédés connus de routage distribué et multichemin.
- La figure 3 illustre le problème de boucle qui peut se poser avec les procédés connus de routage distribué et multichemin.
- La figure 4 illustre le fait que le procédé selon l'invention ne peut pas causer des incohérences par annulation mutuelle entre des routages décidés à des dates différentes par deux routeurs dont l'un est situé en aval de l'autre.
- La figure 5 illustre que le fait que le procédé selon l'invention évite des incohérences, au niveau d'un routeur, causées par une ambiguïté entre des décisions de deux routeurs situés en amont du premier. elle 6 illustre aussi une variante concernant les règles de priorité.
- La figure 6 illustre que le fait que le procédé selon l'invention permet d'éviter des boucle.
- La figure 7 représente un chronogramme illustrant le fonctionnement d'un routeur donné, pendant plusieurs cycles de décision de routage.

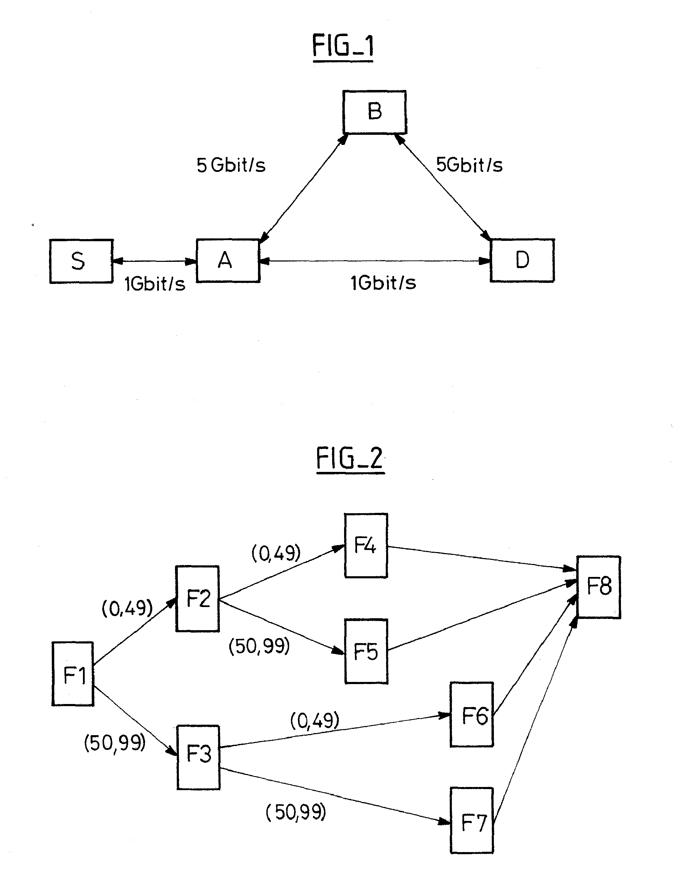

La **figure 1** illustre le problème de cohérence de décisions qui peut se poser avec les procédés connus de routage distribué et multichemin. Elle représente un exemple simple de réseau comportant quatre routeurs S, A, B, D. Le routeur S est relié au routeur A par un lien ayant une bande passante de 1 GB/s. Le routeur A est relié au routeur D par un lien ayant une bande passante de 1 GB/s. Le routeur A est relié en outre au routeur D via le routeur B par deux liens successifs ayant chacun une bande passante de 5 GB/s.

Dans chaque routeur S, A, B, D un chemin vers un routeur de destination donné est calculé de manière à optimiser la transmission de trafic entre le routeur source et le routeur de destination. Ce calcul est fait initialement pour un mode mono-chemin, par exemple en fonction du critère de plus petite longueur (en termes de nombre de liens (ou sauts)), en mettant en oeuvre l'algorithme dit de Dijkstra; mais il peut aussi être fait de manière à occuper en priorité les liens ayant le plus de bande passante. Chaque routeur S, A, B, D peut décider de passer à un routage multichemin. Le fait que les décisions de routage soit distribuées dans tout ce réseau peut conduire alors à des incohérences entre ces décisions. Si par exemple, les routeurs S et A sont passés en mode multichemin, le routeur S voit deux chemins possibles pour la destination D:
-- Le chemin S-A-D avec deux sauts et une bande passante de 1 GB/s, et SA-B-D avec trois sauts et une bande passante de 1 GB/s. Si la décision de routage est basée sur le nombre de sauts, le seul chemin optimal de S à D est le chemin S-A-D. Si la décision de routage implique la bande passante, le seul chemin optimal à partir de A est le chemin A-B-D. Par conséquent, le routeur A pourrait choisir de router des flux par le chemin A-B-D alors que le routeur S a choisi le chemin S-A-D.

La **figure 2** illustre le problème de répartition de charge qui peut se poser avec les procédés connus de routage distribué et multichemin. Elle représente un exemple de réseau comportant des routeurs F1, ...., F8, dans lequel, quand un paquet arrive dans un routeur, une fonction de hachage H est appliquée à des attributs (adresse IP de source, adresse IP de destination, port source, port destination, identité de protocole) du flux f auquel appartient ce paquet. Par exemple, la valeur de cette fonction H(f) est le reste de la division polynomiale par 16, de la valeur binaire de ces attributs. L'ensemble des valeurs de la fonction de hachage H(f) est réparti dans M sous-ensembles prédéterminés, en calculant la valeur h de la fonction H(f) modulo M. Par exemple, si M=100, les valeurs h sont 0 à 99. Les sous-ensembles de flux correspondant respectivement à ces valeurs de h sont notés respectivement : B0, ..., B99.

Chaque sous-ensemble de flux tels que h=i est donc désigné par Bi. Dans ce qui suit on utilisera aussi la notation Bi pour référencer le sous-ensemble de flux tels que h=i ; et on utilisera la notation [i, j], représentant l'intervalle des valeurs i à j, pour référencer la réunion des sous-ensembles de flux Bi, Bi+1, Bi+2, ..., Bi+n, lorsque j=i+n, pour simplifier les référence sur les figures.

Le sous-ensemble auquel appartient un flux sert à déterminer le chemin qu'il devra suivre. Par exemple considérons un flux qui a pour source le routeur F1 et pour destination le routeur F8 :
- Si la valeur h= H(f) modulo 100 de ce flux est comprise dans l'intervalle [0, 49], ce flux fait partie des sous-ensembles de flux désignés par l'intervalle de valeurs [0, 49]. Quand ce flux doit être transmis par le routeur F1, il est émis sur un lien désigné par l'intervalle de valeurs [0, 49] et qui est le lien reliant directement le routeur F1 au routeur F2. Quand ce flux doit être transmis par le routeur F2, il est émis sur un lien désigné par l'intervalle de valeurs [0, 49] et qui est le lien reliant directement le routeur F2 au routeur F4. Le routeur F4 n'ayant qu'un seul lien vers le routeur F8, ce flux est finalement émis sur ce lien pour atteindre le routeur F8.
- Si la valeur h de ce flux est comprise dans l'intervalle [50, 99] ce flux est attribué au sous-ensemble désigné par l'intervalle de valeurs [50, 99]. Quand ce flux doit être transmis par le routeur F1, il est émis sur un lien désigné par l'intervalle de valeurs [50, 99] et reliant directement le routeur F1 au routeur F3. Quand ce flux doit être transmis par le routeur F3, il est émis sur un lien désigné par l'intervalle de valeurs [50, 99] et reliant directement le routeur F3 au routeur F7. Le routeur F7 n'ayant qu'un seul lien vers le routeur F8, ce flux est finalement émis sur ce lien pour atteindre le routeur F8.

Il est à remarquer que le routeur F2 est relié au routeur F5 par un lien direct désigné par l'intervalle de valeurs [50, 99]. Le routeur F5 ayant un lien vers le routeur F8, un flux pourrait finalement être émis sur ce lien pour atteindre le routeur F8. De même, le routeur F3 est relié au routeur F6 par un lien direct désigné par l'intervalle de valeurs [0, 49]. Le routeur F7 ayant un lien vers le routeur F8, un flux pourrait finalement être émis sur ce lien pour atteindre le routeur F8. Mais en réalité aucun flux ayant une valeur h appartenant à cet intervalle [50, 99] n'arrive jusqu'au routeur F2 puisque le routeur F1 émet toujours un tel flux sur le lien qui va au routeur F3. De même, aucun flux ayant une valeur h appartenant à l'intervalle [0, 49] n'arrive jusqu'au routeur F3 puisque le routeur F1 émet toujours un tel flux sur le lien qui va au routeur F2.

Finalement 50% des flux prennent le chemin F1-F2-F4-F8, et 50% des flux prennent le chemin F1-F3-F7-F8. Les portions de chemin F2-F5-F8 et F3-F6-F8 ne sont utilisées par aucun des flux ayant une valeur h appartenant à l'intervalle [0, 99]. Donc les flux ne sont pas équitablement répartis dans tout le réseau, mais seulement entre deux chemins F1-F2-F4-F8 et F1-F3-F7-F8. Il n'y a donc pas une bonne utilisation de toutes les ressources du réseau.

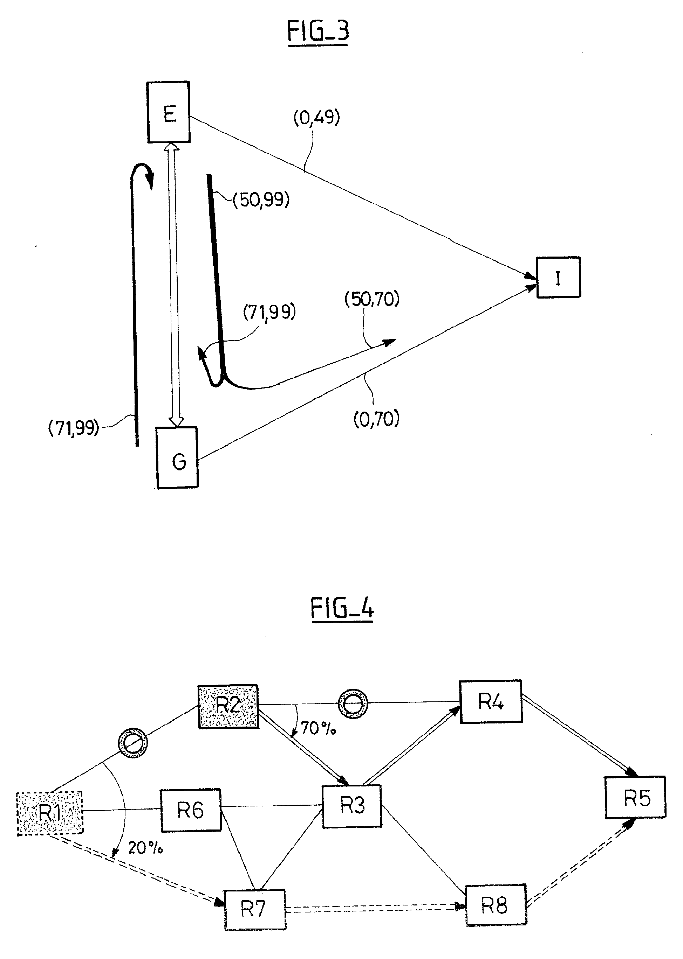

La **figure 3** illustre le problème de boucle qui peut se poser avec les procédés connus de routage distribué et multichemin. Elle représente un exemple de réseau comportant trois routeurs E, 1, G, chaque routeur étant relié à chacun des deux autres par un lien direct. Comme dans l'exemple précédent, le sous-ensemble auquel appartient la valeur h calculée pour un flux sert à déterminer le chemin qu'il devra suivre. On considère ce réseau à un moment où les deux routeurs E et G ont décidé de passer en mode multichemin. Dans cet exemple, les règles de routage utilisées respectivement pour les routeurs E et G sont les suivantes :
- Considérons un flux qui a pour source le routeur E et pour destination le routeur 1. Par exemple, si la valeur h de ce flux est comprise dans l'intervalle [0, 49], ce flux est attribué au sous-ensemble de flux désigné par l'intervalle de valeurs [0, 49]. Quand ce flux doit être émis par le routeur E, il est émis sur un lien désigné par l'intervalle de valeurs [0, 49] et qui est le lien reliant directement le routeur E au routeur I.
- Au contraire, si la valeur h de ce flux est comprise dans l'intervalle [50, 99], ce flux est attribué au sous-ensemble de flux désigné par l'intervalle de valeurs [50, 99]. Quand ce flux doit être émis par le routeur E, il est émis sur un lien désigné par l'intervalle de valeurs [50, 99] et qui est le lien reliant directement le routeur E au routeur G.
- Considérons un flux qui a pour source le routeur G et pour destination le routeur 1. Par exemple, si la valeur h de ce flux est comprise dans l'intervalle [0, 70], ce flux est attribué au sous-ensemble désigné par l'intervalle de valeurs [0, 70]. Quand ce flux doit être transmis par le routeur G, il est émis sur un lien désigné par l'intervalle de valeurs [0, 70] et qui est le lien reliant directement le routeur G au routeur 1.
- Au contraire, si la valeur h de ce flux est comprise dans l'intervalle [71, 99], ce flux est attribué au sous-ensemble désigné par l'intervalle de valeurs [71, 99]. Quand ce flux doit être transmis par le routeur G, il est émis sur un lien désigné par l'intervalle de valeurs [71, 99] et qui est le lien reliant directement le routeur E au routeur G.

Il apparaît deux boucles :
- Un flux qui doit être émis par le routeur G et dont la valeur h appartient à l'intervalle [71, 99] est émis sur le lien G-E. Il va jusqu'au routeur E puis est émis par le routeur E sur le lien E-G, au lieu du lien E-1 puisque celui-ci est réservé aux flux tels que h appartient à l'intervalle [0, 49]. Il fait inutilement le trajet G-E-G, et n'atteindra jamais sa destination I.
- Un flux qui doit être émis par le routeur E et dont la valeur h appartient à l'intervalle [71, 99], par exemple 71, est émis sur le lien E-G. Il va jusqu'au routeur G puis est émis par le routeur G sur le lien G-E, au lieu du lien G-I puisque celui-ci est réservé aux flux tels que h appartient à l'intervalle [0, 70]. Il fait inutilement le trajet E-G-E, et n'atteindra jamais sa destination I.
- Un flux qui doit être émis par le routeur E et dont la valeur h appartient à l'intervalle [50, 70], par exemple 50, est émis sur le lien E-G. Il va jusqu'au routeur G puis est émis par le routeur G sur le lien G-l, puisque celui-ci est réservé aux flux tels que h appartient à l'intervalle [0, 70]. Le flux atteint normalement sa destination 1, par le chemin alternatif E-G-1.

La description suit porte sur des exemples de mise en oeuvre du procédé selon l'invention. Les réseaux de communication considérés sont de type IP. Mais, l'invention n'est pas limitée à ce type de réseau de communication. Elle concerne en effet tous les réseaux mettant en oeuvre un algorithme de routage de flux de paquets de données, qui a les caractéristiques suivantes :
- Par défaut, le routage est de type mono-chemin (par exemple basé sur un routage de type Plus Court Chemin), et il bascule progressivement vers un routage de type multichemin, en cas de détection d'une surcharge de trafic sur un lien (dépassement d'un seuil de surcharge de ce lien).
- Le routage opère sur des flux de paquets (et non sur des paquets).
- Pour attribuer un chemin à chaque flux, une étape préalable consiste à regrouper les flux en M sous-ensembles de flux. Tous les flux attribués à un même sous-ensemble sont transmis sur un même chemin attribué à ce sous-ensemble de flux. Pour cela, les flux sont distribués par un procédé connu de distribution, appelé hachage dynamique : Quand un paquet arrive dans un routeur, une fonction de hachage H est appliquée à des attributs (adresse IP de source, adresse IP de destination, port du routeur source, port du routeur de destination, identité du protocole réseau) du flux f auquel appartient ce paquet. Par exemple, la valeur de cette fonction H(f) est le reste de la division polynomiale par 16, de la valeur binaire de ces attributs. L'ensemble des valeurs de la fonction de hachage est réparti dans M valeurs entières prédéterminés, en calculant la valeur h de la fonction H(f) modulo M. Le nombre M est choisi très supérieur au nombre de sorties existant sur un routeur. Par exemple, si M=100, les valeurs h sont réparties dans les 100 valeurs suivants : 0 à 99.
   Ces valeurs sont utilisées pour distribuer l'ensemble des flux arrivant sur un routeur donné, en M sous-ensembles de flux. Chaque sous-ensemble de flux est désigné par un identificateur, référencée Bi dans ce qui suit. Pour chaque flux, on calcule la valeur h de la fonction H(f) modulo M, puis on détermine la valeur h . On en déduit que ce flux appartient à un sous-ensemble Bi de flux. Par ce procédé, les flux sont distribués de manière statistiquement équitable en M sous-ensembles de flux B1, ...., B100. La valeur M=100 permet une granularité suffisamment fine pour que cette répartition soit statistiquement équitable, et permet une déviation très progressive du trafic, puisqu'on peut l'augmenter par pas correspondants chacun à un pour-cent de l'ensemble des flux.
- Tous les flux appartenant à un même sous-ensemble Bi donné sont émis par un même port du routeur considéré. Le sous-ensemble Bi de flux à dévier est choisi aléatoirement pour maintenir l'équité entre les sous-ensembles de flux impacté par le changement de route, et donc éviter de défavoriser toujours les mêmes utilisateurs lorsqu'une difficulté affecte l'un des sous-ensembles de flux Bi.
- Le routage multichemin peut être décidé par tout routeur qui est autorisé à faire du routage multichemin. Il passe du routage monochemin au routage multichemin soit à la suite d'une « alarme » générée soit par une décision arbitraire de l'opérateur du réseau, soit par la détection d'un dépassement de seuil de charge sur un lien.
- L'algorithme de routage supporte une gestion de trafic de type TE-LSA (pour « Trafic Engineering - Link State Advertisement »), comme par exemple le protocole de routage d'état de liaison OSPF-TE (pour « Open Shortest Path First - Trafic Engineering ») ou le protocole IS-IS-TE (pour « Intermediate System - Intermediate System - Trafic Engineering »).

La mise en oeuvre du procédé selon l'invention est la suivante:
- Suite à une alarme de dépassement de charge autorisée sur un lien, un routeur R décide de dévier une pluralité de sous-ensembles de flux, B1, ..., Bn d'un chemin par défaut P0 vers un chemin alternatif P1, choisi parmi les chemins alternatifs P1, P2, P3, etc, permettant d'aller du routeur R vers un routeur de destination D. Avant d'effectuer lui-même cette déviation, le routeur R envoie une instruction de déviation à lui-même et à tous les routeurs situés en aval de ce routeur R sur tous les chemins alternatifs P1, P2, P3, etc, permettant d'aller du routeur source R jusqu'au routeur de destination, D. La déviation du trafic d'un lien est réalisée progressivement par une suite d'instructions de déviation, chacune portant par exemple sur 5% du trafic de ce lien.
- Aucune instruction de déviation n'est émise le long du chemin par défaut P0. Mais seuls les routeurs du chemin par P0 faisant aussi partie d'un chemin alternatif sont susceptibles de recevoir des instructions de déviations.
- L'instruction de déviation, notée FDA dans ce qui suit, contient les informations suivantes :
   -- tₑ la date d'émission de l'instruction, cette émission étant déclenchée par la décision du passage du routage monochemin au routage multichemin,
   -- tₐ la date de la dernière alarme qui conduisit le routeur R à prendre cette décision,
   -- R l'identité du routeur qui émet l'instruction de déviation,
   -- les identités B1, ..., Bn des sous-ensembles de flux qui sont concernés par cette instruction de déviation,
   -- P1 le chemin alternatif (sous la forme d'une liste de sauts) que doivent suivre tous les sous-ensembles de flux identifiés par B1, ..., Bn.

FDA = R, tₑ, tₐ, { B1, ..., Bn }, P1 constitue une instruction de déviation des sous-ensembles de flux B1, ..., Bn vers le chemin alternatif P1. Cette instruction n'indique que les sous-ensembles de flux déviés par le routeur R qui émet cette instruction. Elle ne mentionne pas ceux qui doivent rester sur le chemin par défaut P0. Cette instruction a pour effet d'assurer le routage de ces sous-ensembles de flux B1, ..., Bn tout le long du chemin alternatif P1 en aval du routeur R qui est passé en mode multichemin. Il est à remarquer qu'elle n'affecte pas le routage des flux qui doivent rester sur le chemin par défaut.
- Chaque instruction de déviation reçue par un routeur est mémorisée dans ce routeur. Lorsqu'elle sera exécutée, son exécution consistera à transformer l'instruction de déviation en une instruction de routage pour chaque sous-ensemble Bi mentionné dans l'instruction de déviation. Chaque instruction de routage ainsi générée peut être utilisée pour mettre à jour, la table de routage du routeur qui l'a reçue. Mais cette instruction de routage n'est pas forcément exécutée. Plusieurs routeurs peuvent être passés en mode de routage multichemin et être en concurrence avec le routeur R pour donner des instructions contradictoires à un même routeur Ra situé en aval. Ils peuvent avoir envoyé des instructions différentes, au cours d'un même cycle de décision, en ce qui concerne un même sous-ensemble de flux, Bi, et une même destination D. Pour maintenir la cohérence entre les décisions de routage des routeurs, c'est à dire sélectionner un seule sortie du routeur Ra en aval du routeur R, pour un sous-ensemble Bi donné, pour une destination D donnée, pendant un cycle de décision donné, les instructions concernant ce sous-ensemble Bi et cette destination D, sont traités selon un ordre de priorité. Cet ordre est défini par des règles globales qui sont les mêmes dans tous les routeurs du réseau, ce qui permet d'assurer que tous les routeurs destinataires d'une instruction la traitent avec la même priorité et donc exécutent une instruction prioritaire en même temps, ce qui, en plus de lever les contradictions, permet d'éviter les déviations de trafic comme celles illustrées la figure 2, et les boucles comme celle illustrées par la figure 3.
- Une instruction mémorisée qui n'est pas prioritaire à un moment donné peut le devenir par la suite, par exemple si le routeur dont l'instruction avait la priorité est repassé en mode routage mono-chemin. Toutes les instructions de routage relatives à un ensemble Bi sont mémorisées. Une instruction de routage pour un ensemble Bi n'est effacée que au moment où les flux de Bi sont à nouveau routés selon le chemin par défaut.
- Selon un mode de mise en oeuvre préférentiel, les règles définissant la priorité sont les suivantes. Elles sont appliquées successivement dans cet ordre, si c'est nécessaire pour départager des instructions concurrentes :
   -- 1) L'instruction de routage qui a la date d'émission tₑ la plus récente est plus prioritaire.
   -- 2) Si plusieurs instruction de routage ont la même date d'émission, l'instruction de routage qui a la date d'alarme tₐ la plus récente est plus prioritaire.
   -- 3) Si plusieurs instruction de routage ont la même date d'émission tₑ , et la même date d'alarme tₐ, l'instruction de routage qui vient du routeur R le plus proche du routeur de destination D, est plus prioritaire.
   -- 4) Si plusieurs instructions de routage ont la même date d'émission tₑ , la même date d'alarme tₐ, et viennent de routeurs qui sont à une même distance du routeur de destination D, alors l'instruction de routage la plus prioritaire est celle qui contient une identité de routeur émetteur R telle que cette identité R a un certain ordre lexical.
- Une variante du procédé selon l'invention comporte une règle supplémentaire, portant sur un critère local. Elle permet d'éviter un allongement incontrôlé du trajet effectué par un ensemble de flux. Si cette variante est mise en oeuvre, la règle supplémentaire est appliquée préalablement aux règles 1 à 4, définies précédemment, et qui portent sur des critères globaux,. Cette règle supplémentaire est la suivante : Sélectionner l'instruction de routage telle que la distance, mesurée en nombre de sauts, entre le noeud considéré et le noeud de destination, sur le chemin alternatif mentionné dans cette instruction, est la plus courte. Les règes 1 à 4 ne sont alors utilisées qu'en cas d'égalité des distances pour toutes les instructions de routage applicables à un flot.
- D'autre part, les instructions reçues ne peuvent être exécutées qu'après un délai prédéterminé, compté à partir d'un début de cycle dit de décision, synchrone pour tous les routeur, de sorte que si une instruction arrive en retard par rapport à une autre émise plus tard (parce qu'elle a suivi un chemin plus long), elle ne perd pas la priorité à laquelle elle a droit par sa date d'émission tₑ.
- Lorsque le routeur R décide de revenir au mode de routage monochemin, c'est à dire faire passer une pluralité de sous-ensembles de flux, B1, ..., Bn d'un chemin alternatif P1 vers un chemin par défaut P0 pour atteindre un routeur de destination D, il émet un autre type d'instruction, dite de retour, notée FRA. Comme pour la déviation, le retour est fait progressivement, par exemple par pas correspondant à 10% du trafic dévié. Avant d'effectuer lui-même ce retour, le routeur R envoie une instruction de retour à lui-même et à tous les routeurs situés en aval de ce routeur R sur le chemin alternatif P1, jusqu'au routeur de destination D. L'instruction FRA contient les informations suivantes :
   -- R l'identité du routeur qui émet l'instruction de retour,
   -- les identités Bi, ..., Bj des sous-ensembles de flux qui sont concernés par cette instruction de retour (elle ne concerne pas forcément tous les sous-ensembles B1, ..., Bn déviés par la précédente instruction de déviation),
   -- P1 l'identité du chemin alternatif que suivent ces des sous-ensembles de flux Bi, ..., Bj, et qu'ils doivent quitter pou revenir sur le chemin par défaut, prédéterminé et donc connu de tous les routeurs.

L'exécution de l'instruction de retour consistera à effacer dans la table de routage les instructions de routage correspondantes, c'est à dire contenant les informations comprises dans l'instruction de retour.

Les instructions de retour sont exécutées avant les instructions de déviation.

Les **figures 4, 5, 6** représentent des exemples de réseau mettant en oeuvre le procédé selon l'invention, dans différents exemples de configuration de routage distribué et multichemin.

Le réseau représenté sur la **figure 4** comporte huit routeurs R1, ..., R8. Le routeur R1 est relié au routeur R5 notamment par un chemin R1- R2-R4-R5 et par un chemin R1-R7-R8-R5. Un routeur central R3 est relié directement à chacun des routeurs R2, R4, R7, R8, et il relié au routeur R1 via un routeur R6. Le routeur R6 a en outre une liaison avec le routeur R7. Si R1 est la source et R5 la destination, les chemins R1-R2-R4-R5 et R1-R7-R8-R5 sont les deux chemins comportant le moins de sauts (trois). Par exemple, R1-R2-R4-R5 est le chemin par défaut, et R1-R7-R8-R5 est un chemin alternatif. Les chemins passant par R3 sont des chemin qui sont plus longs (Ils comportent tous quatre sauts), mais ils peuvent constituer des chemins alternatifs en cas de surcharge sur les chemins les plus courts.

La **figure 4** illustre que le fait qu'une instruction de déviation, n'indiquant que les flux à dévier, ne peut pas causer des incohérences par annulation mutuelle entre des routages décidés à des dates différentes par deux routeurs dont l'un est situé en aval de l'autre. Dans l'exemple illustré par cette figure 4, le chemin par défaut entre la source R1 et la destination R5 est le chemin R1-R2-R4-R5. Mais le lien R2-R4 est proche de la saturation. Le routeur R2 décide alors de passer en routage multichemin, et de dévier 70% du trafic du chemin par défaut R2-R4-R5 vers le chemin R2-R3-R4-R5. Conformément au procédé selon l'invention, le routeur R2 envoie à lui-même et à tous les routeurs qui sont en aval, sur le chemin alternatif choisi à destination de R5 (R2-R3-R4-R5), une instruction demandant de dévier les flux concernés du chemin par défaut R2-R4-R5 vers le chemin R2-R3-R4-R5.

Un peu plus tard, le lien R1-R2 est lui aussi proche de la saturation. Le routeur R1 décide alors de passer au routage multichemin, et il dévie alors 20% du trafic du chemin par défaut R1-R2-R4-R5 vers le chemin alternatif R1-R7-R8-R5. Conformément au procédé selon l'invention, le routeur R1 envoie à lui-même et à tous les routeurs qui sont en aval sur le chemin alternatif choisi à destination de R5, (R1-R7-R8-R5), une instruction demandant que certains flux (20% des flux, explicitement désignés par des identificateurs) soient déviés vers le chemin alternatif R1-R7-R8-R5. Les 80% de flux qui doivent rester a priori sur le chemin par défaut R1-R2-R4-R5 ne sont pas mentionnés dans cette instruction. Par conséquent, le routeur R2 ne va pas dévier ces 80% de flux hors du chemin par défaut R1-R2-R4-R5, puisqu'ils ne sont pas mentionnés dans l'instruction de déviation. Il laisse donc certains flux continuer par le chemin R2-R4-R5. Il ne peut pas y avoir d'annulation mutuelle entre les décisions de routage du routeur R1 et les décisions de routage du routeur R2.

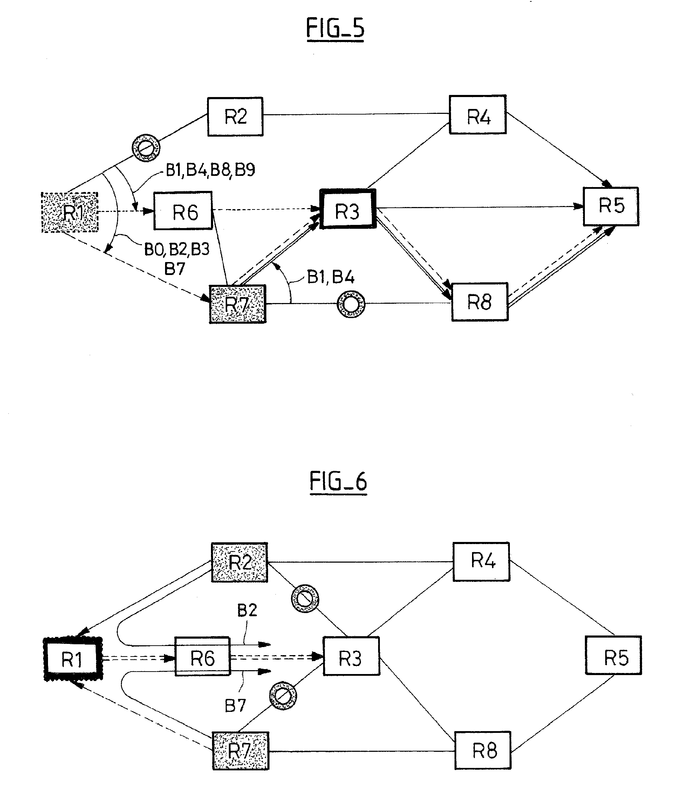

La **figure 5** illustre que le fait qu'un routeur qui n'exécute que l'instruction la plus prioritaire évite des incohérences entre des décisions contradictoires de deux routeurs dont l'un est situé en aval de l'autre. Le réseau représenté sur la figure 5 est semblable à celui représenté sur la figure 4. il comporte un lien supplémentaire entre les routeurs R3 et R5. Dans l'exemple illustré par cette figure 5, le chemin par défaut entre le routeur R7 et le routeur R5, est le chemin R7-R8-R5. Le chemin par défaut entre le routeur R1 et le routeur R5 est le chemin R1-R2-R4-R5. A un moment donné, le lien R7-R8 génère une alarme. Le routeur R7 décide de dévier les sous-ensembles de flux B1, B4 du chemin par défaut R7-R8-R5 vers le chemin alternatif R7-R3-R8-R5. Conformément au procédé selon l'invention, le routeur R7 envoie à lui-même et à tous les routeurs qui sont en aval sur le chemin alternatif R7-R3-R8-R5, une instruction demandant de dévier les sous-ensembles de flux B1, B4 du chemin par défaut R1-R7-R8-R5 vers le chemin alternatif R7-R3-R8-R5.

Un peu plus tard, le lien R1-R2 génère une alarme. Le routeur R1 décide, d'une part, de dévier les ensembles de flux B1, B4, B8, B9 du chemin par défaut R1-R2-R4-R5 vers le chemin alternatif R1-R6-R3-R5 ; et, d'autre part, de dévier les sous-ensembles de flux B0, B2, B3, B7 du chemin par défaut R1-R2-R4-R5 vers le chemin alternatif R1-R7-R3-R8-R5. Conformément au procédé selon l'invention, le routeur R1 émet des instructions de déviation à lui-même et à tous les routeurs qui sont en aval sur les chemins alternatifs à destination de R5. Une instruction adressée aux routeurs du chemin alternatif R1-R6-R3-R5 demande de dévier les ensembles de flux B1, B4, B8, B9 du chemin par défaut R1-R2-R4-R5 vers le chemin alternatif R1-R6-R3-R5; et l'autre adressée aux routeurs du chemin alternatif R1-R7-R3-R8-R5 demande de dévier les sous-ensembles de flux B0, B2, B3, B7 du chemin par défaut R1-R2-R4-R5 vers le chemin alternatif R1-R7-R3-R8-R5.

Le routeur R3 est donc en présence de deux instructions de déviation contradictoires pour les ensembles de flux B1 et B4 : doit-il les émettre en direction du routeur R8 selon la première instruction de R7, ou en direction du routeur R4 selon la seconde instruction de R1 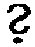 Le routeur R3 exécute l'instruction ayant la plus grande priorité.

Dans un premier exemple de mise en oeuvre, l'instruction la plus prioritaire est déterminée en appliquant seulement les règles 1 à 4 : c'est l'instruction émise la plus récemment, c'est à dire la décision du routeur R1 de leur faire suivre le chemin R1-R6-R3-R8-R5.

Dans un second exemple de mise en oeuvre, l'instruction la plus prioritaire est déterminée en appliquant d'abord la règle supplémentaire, pour éviter qu'un arbitrage par les règles 1 à 4 ne redirige un ensemble de flots sur un chemin plus long que le chemin alternatif initialement choisi. Les règles 1 à 4 sont appliquées ensuite, et seulement si la règle supplémentaire n'a pas suffi pas pour déterminer l'instruction la plus prioritaire. Dans cet exemple, l'instruction émise par le routeur R1 et concernant les sous-ensembles B1, B4 indique le chemin alternatif R1-R6-**R3**-R5 ; alors que l'instruction émise par le routeur R7 et concernant les sous-ensembles B1, B4 indique le chemin alternatif R7-R3-**R8**-R5. La distance vers la destination R5 sur le chemin R1-R6-**R3**-R5 est de un saut (R3-R5) , alors que la distance vers la destination R5 sur le chemin R1-R6-**R8**-R5 est de deux sauts (R3-R8-R5). Par conséquent, l'instruction de routage telle que la distance entre le prochain saut mentionné dans cette instruction et la destination est la plus courte, est l'instruction émise par R1, de suivre le chemin R1-R6-R3-R5.

La **figure 6** illustre que le fait que la mémorisation des instructions reçues et leur exécution selon des règles de priorité communes permet d'éviter des boucles. Le réseau représenté sur la figure 6 est semblable à celui représenté sur la figure 4. Dans l'exemple illustré par cette figure 6, le chemin par défaut entre le routeur R1 et le routeur R3 est le chemin R1-R7-R3.
- A l'instant t=1, le lien R7-R3 génère une alarme. Le routeur R7 décide de dévier les flux appartenant à un sous-ensemble B7 et ayant pour destination R3, du chemin par défaut R7-R3 vers le chemin alternatif R7-R1-R6-R3. Conformément au procédé selon l'invention, le routeur R7 envoie à destination de R3, sur le chemin alternatif R7-R1-R6-R3 une instruction de déviation demandant de dévier les flux du sous-ensemble B7, du chemin par défaut R7-R3 vers le chemin alternatif R7-R1-R6-R3.
- A l'instant t=5 , le lien R2-R3 génère une alarme. Le routeur R2 décide de dévier les flux appartenant à un sous-ensemble B2, du chemin par défaut R2-R3 vers le chemin alternatif R2-R1-R6-R3. Conformément au procédé selon l'invention, le routeur R2 envoie à lui-même et à tous les routeurs qui sont en aval sur le chemin alternatif à destination de R3, R2-R1-R6-R3, une instruction demandant de dévier les flux appartenant au sous-ensemble B2, du chemin par défaut R2-R3 vers le chemin alternatif R2-R1-R6-R3.
- A l'instant t=10, le lien R2-R3 n'est plus sujet à une alarme. Le routeur R2 décide de ramener les flux appartenant au sous-ensemble 82, du chemin alternatif R2-R1-R6-R3 au chemin par défaut R2-R3. Conformément au procédé selon l'invention, le routeur R2 envoie à lui-même et à tous les routeurs qui sont en aval sur le chemin alternatif R2-R1-R6-R3, une instruction de retour demandant de supprimer, pour le sous-ensemble B2, toutes les instructions de routage vers le chemin alternatif R2-R1-R6-R3.

Dans cet exemple, il y a un risque de création de boucle, à cause de la portion de chemin R1-R6-R3 qui est commune pour les deux chemins alternatifs utilisés. Mais le fait de mémoriser les instructions successivement reçues par un routeur, en l'occurrence R1, permet d'éviter cette création de boucle.

Si l'instruction précédemment émise par le routeur R7 avait été effacée dans les routeurs R1 et R6, alors à l'instant t=10 les flux provenant de R1 et R7 à destination de R3 suivraient le chemin par défaut R1-R7-R3. Donc les flux émis par R1 à destination de R3, passeraient par le chemin par défaut, R1-R7, et les mêmes flux seraient ré-émis par R7 en direction de R1, en vertu de l'instruction de déviation en cours d'exécution par R7. Donc une boucle apparaîtrait entre les routeurs R7 et R1 pour les flux du sous-ensemble B7.

Au contraire, conformément à l'invention, à l'instant t=10, l'instruction de déviation émise par R7 est encore mémorisée dans les routeurs R7, R1, R6,R3. Elle redevient alors prioritaire puisque l'effet, dans les tables de routage, de l'instruction de déviation émise par le routeur R2 a été annulée à l'instant t= 10. Les flux du sous-ensemble B7 suivent donc le chemin alternatif R7-R1-R6-R3, alors que les autres flux à destination de R3, notamment ceux du sous-ensemble B2, suivent le chemin par défaut R2-R3. Il n'y a donc pas de boucle.

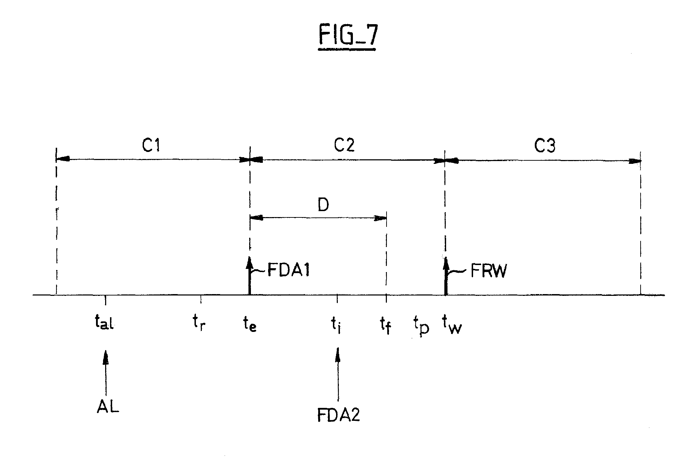

La **figure 7** représente un chronogramme illustrant le fonctionnement d'un routeur donné pendant plusieurs cycles de décision, C1, C2, C3, avec une période constante qui est la même pour tous les routeurs. A la fin de chaque cycle de décision, le routeur considéré est autorisé à émettre éventuellement une instruction de déviation ou de retour. Dans l'exemple représenté, le routeur considéré reçoit une alarme ALARM à l'instant tₐ au cours du cycle C1. Juste avant la fin du cycle de décision C1, il détermine un ou plusieurs chemins alternatifs permettant par exemple de remédier à la surcharge signalée sur un lien. A l'instant tᵣ il est prêt à donner une instruction de déviation à lui-même et aux routeurs situés en aval sur tous les chemins alternatifs reliant le routeur considéré à un routeur de destination donné, pour certains sous-ensembles de flux. Il émet une instruction de déviation FDA1 à la fin du cycle de décision C1, à l'instant tₑ.

Au cours du cycle C2, le routeur reçoit une instruction de déviation FDA2 à l'instant ti. Il l'inscrit en mémoire, mais il attend jusqu'à un instant t_{f}, tel que t_{f}-tₑ = D pour exploiter cette instruction, car une temporisation de durée D est prévue, à partir de chaque début de cycle, pour assurer que tous les routeurs du réseau ont reçu une instruction FDA ou FRA donnée, avant de lancer l'exécution dans tous les routeurs. A cet instant t_{f} le routeur considéré détermine quelle est l'instruction la plus prioritaire parmi toutes les instructions qu'il a en mémoire, en appliquant les quatre règles et leur variante décrites précédemment. A un instant †ₚ il a terminé la sélection de l'instruction la plus prioritaire et le calcul des nouvelles données de la table de routage, conformément à cette instruction la plus prioritaire. Puis à l'instant t_{w} correspondant à la fin du cycle C2, le routeur commence à utiliser les nouvelles données de la table de routage pour transmettre des flux de paquets de données, selon le chemin alternatif.

Le procédé selon l'invention est avantageux en particulier pour les réseaux utilisant un protocole de routage multichemin sensible à la charge, parce qu'il permet de synchroniser, entre les routeurs impliqués, des informations de charge, et de synchroniser, entre les routeurs impliqués, l'exécution de décisions de routage.

La mise en oeuvre du procédé selon l'invention dans un routeur est à la portée d'un Homme de l'Art, en réalisant des moyens logiciels réalisant les opérations décrites ci-dessus.

## Revendications

1. Procédé de routage distribué multichemin, sur des liens entre des routeurs (R1, ... , R8) d'un réseau de télécommunication, une pluralité de ces routeurs comportant des moyens pour décider de passer d'un routage mono-chemin à un routage multichemin ; **caractérisé en ce qu'**il consiste :
- dans un premier routeur (R2) qui a décidé de passer d'un routage mono-chemin sur un chemin (R2-R4-R5 ) dit par défaut à un routage multichemin, sur au moins un chemin alternatif (R2-R3-R4-R5, R2-R3-R8-R5) au moins partiellement disjoint du chemin par défaut, et reliant le premier routeur (R2) à un routeur dit de destination (R5), pour acheminer des flux de paquets de données de ce premier routeur (R2) vers ce routeur de destination (R5), à envoyer une instruction dite de déviation, à lui-même et aux routeurs (R3, R4) situés sur un chemin alternatif (R2-R3-R8-R5) cette instruction leur indiquant au moins une identité de flux qui doit être dévié, et ce chemin alternatif (R2-R3-R8-R5), ce chemin alternatif devant être utilisé respectivement pour tous les flux ainsi identifiés, et n'envoyer aucune instruction concernant les flux qui doivent rester sur le chemin par défaut ;
- dans chaque routeur destinataire (R3), à enregistrer chaque instruction de déviation reçue, et exécuter une instruction sélectionnée parmi toutes les instructions enregistrées, cette instruction étant sélectionnée selon au moins une règle de priorité commune pour tous les routeurs du réseau, l'exécution des instructions de déviation étant synchronisée dans tous les noeuds du réseau, et cette exécution consistant à générer des informations de routage et les inscrire dans la table de routage du routeur considéré.

2. Procédé selon la revendication 1, **caractérisé en ce que** chaque instruction de déviation contient la date d'émission de cette instruction, et la date d'une alarme qui a déclenché l'émission de cette instruction.

3. Procédé selon la revendication 2, **caractérisé en ce que** pour sélectionner une instruction de déviation selon au moins une règle de priorité commune pour tous les routeurs du réseau, il consiste à :
-- sélectionner l'instruction de déviation qui a la date d'émission la plus récente;
-- ou si plusieurs instruction de déviation ont la même date d'émission, sélectionner l'instruction de déviation qui a la date d'alarme la plus récente ;
-- ou si plusieurs instruction de déviation ont la même date d'émission, et la même date d'alarme, sélectionner l'instruction de déviation qui vient du routeur le plus proche du routeur de destination ;
-- ou si plusieurs instruction de déviation ont la même date d'émission, ont la même date d'alarme, et viennent de routeurs qui sont à une même distance du routeur de destination, alors sélectionner l'instruction qui contient une identité de routeur émetteur d'instruction de déviation, telle que cette identité a un certain ordre lexical.

4. Procédé selon la revendication 2, **caractérisé en ce que** pour sélectionner une instruction selon au moins une règle de priorité commune pour tous les routeurs du réseau, il consiste à sélectionner l'instruction de routage telle que la distance, mesurée en nombre de sauts, entre le noeud considéré et le noeud de destination, sur le chemin alternatif mentionné dans cette instruction, est la plus courte ;
et ensuite, si la règle précédente ne suffit pas à sélectionner une instruction, il consiste à :
-- sélectionner l'instruction de déviation qui a la date d'émission la plus récente ;
-- ou si plusieurs instruction de déviation ont la même date d'émission, sélectionner l'instruction de déviation qui a la date d'alarme la plus récente ;
-- ou si plusieurs instruction de déviation ont la même date d'émission, et la même date d'alarme, sélectionner l'instruction de déviation qui vient du routeur le plus proche du routeur de destination ;
-- ou si plusieurs instruction de déviation ont la même date d'émission, ont la même date d'alarme, et viennent de routeurs qui sont à une même distance du routeur de destination, alors sélectionner l'instruction qui contient une identité de routeur émetteur d'instruction de déviation, telle que cette identité a un certain ordre lexical.

5. Procédé selon la revendication 1, **caractérisé en ce qu'**il consiste en outre:
- dans un premier routeur (R2) qui a décidé de revenir d'un routage multichemin sur un chemin alternatif (R2-R3-R8-R5) à un routage mono-chemin sur un chemin par défaut (R2-R4-R5), à envoyer une instruction à lui-même et aux routeurs (R3, R4) situés sur ce chemin alternatif (R2-R3-R8-R5) cette instruction leur indiquant au moins une identité de flux qui doit être ramené sur le chemin par défaut (R2-R4-R5) , et l'identité du chemin alternatif concerné (R2-R3-R8-R5) ;
- dans chaque routeur destinataire (R3), exécuter cette instruction de retour en modifiant dans leurs tables de routage les informations de routage correspondantes, l'exécution des instructions de retour étant prioritaire par rapport à l'exécution des instructions de déviation.

6. Routeur, comportant des moyens pour décider de passer d'un routage mono-chemin à un routage multichemin, ce routeur (R2) étant susceptible d'être relié par une pluralité de liens à d'autres routeurs (R1, ... , R8) d'un réseau de télécommunication ; **caractérisé en ce qu'**il comprend des moyens de calcul agencés pour :
- passer d'un routage mono-chemin sur un chemin (R2-R4-R5 ) dit par défaut à un routage multichemin, sur au moins un chemin alternatif (R2-R3-R4-R5, R2-R3-R8-R5) au moins partiellement disjoint du chemin par défaut, et reliant le premier routeur (R2) à un routeur dit de destination (R5), pour acheminer des flux de paquets de données de ce premier routeur (R2) vers ce routeur de destination (R5), à envoyer une instruction dite de déviation, à lui-même et aux routeurs (R3, R4) situés sur un chemin alternatif (R2-R3-R8-R5) cette instruction leur indiquant au moins une identité de flux qui doit être dévié, et ce chemin alternatif (R2-R3-R8-R5), ce chemin alternatif devant être utilisé respectivement pour tous les flux ainsi identifiés, et n'envoyer aucune instruction concernant les flux qui doivent rester sur le chemin par défaut;
- à enregistrer chaque instruction de déviation reçue, et exécuter une instruction sélectionnée parmi toutes les instructions enregistrées, cette instruction étant sélectionnée selon au moins une règle de priorité commune pour tous les routeurs du réseau, l'exécution des instructions de déviation étant synchronisée dans tous les noeuds du réseau, et cette exécution consistant à générer des informations de routage et les inscrire dans la table de routage du routeur considéré.

7. Routeur selon la revendication 6, **caractérisé en ce que** lesdits moyens de calcul sont agencés pour que chaque instruction de déviation contienne la date d'émission de cette instruction, et la date d'une alarme qui a déclenché l'émission de cette instruction.

8. Routeur selon la revendication 6, **caractérisé en ce que** lesdits moyens de calcul sont agencés pour :
-- sélectionner l'instruction de déviation qui a la date d'émission la plus récente ;
-- ou si plusieurs instruction de déviation ont la même date d'émission, sélectionner l'instruction de déviation qui a la date d'alarme la plus récente ;
-- ou si plusieurs instruction de déviation ont la même date d'émission, et la même date d'alarme, sélectionner l'instruction de déviation qui vient du routeur le plus proche du routeur de destination ;
-- ou si plusieurs instruction de déviation ont la même date d'émission, ont la même date d'alarme, et viennent de routeurs qui sont à une même distance du routeur de destination, alors sélectionner l'instruction qui contient une identité de routeur émetteur d'instruction de déviation, telle que cette identité a un certain ordre lexical.

9. Routeur selon la revendication 6, **caractérisé en ce que** lesdits moyens de calcul sont agencés pour sélectionner l'instruction de routage telle que la distance, mesurée en nombre de sauts, entre le noeud considéré et le noeud de destination, sur le chemin alternatif mentionné dans cette instruction, est la plus courte ;
et ensuite, si la règle précédente ne suffit pas à sélectionner une instruction, pour :
-- sélectionner l'instruction de déviation qui a la date d'émission la plus récente ;
-- ou si plusieurs instruction de déviation ont la même date d'émission, sélectionner l'instruction de déviation qui a la date d'alarme la plus récente ;
-- ou si plusieurs instruction de déviation ont la même date d'émission, et la même date d'alarme, sélectionner l'instruction de déviation qui vient du routeur le plus proche du routeur de destination ;
-- ou si plusieurs instruction de déviation ont la même date d'émission, ont la même date d'alarme, et viennent de routeurs qui sont à une même distance du routeur de destination, alors sélectionner l'instruction qui contient une identité de routeur émetteur d'instruction de déviation, telle que cette identité a un certain ordre lexical.

10. Routeur selon la revendication 6, **caractérisé en ce que** lesdits moyens de calcul sont agencés pour :
- si ce routeur (R2) a décidé de revenir d'un routage multichemin sur un chemin alternatif (R2-R3-R8-R5) à un routage mono-chemin sur un chemin par défaut (R2-R4-R5) , envoyer une instruction à lui-même et aux routeurs (R3, R4) situés sur ce chemin alternatif (R2-R3-R8-R5) cette instruction leur indiquant au moins une identité de flux qui doit être ramené sur le chemin par défaut (R2-R4-R5), et l'identité du chemin alternatif concerné (R2-R3-R8-R5);
- si ce routeur (R3) reçoit une instruction de déviation, exécuter cette instruction de retour en modifiant dans ses tables de routage les informations de routage correspondantes, l'exécution des instructions de retour étant prioritaire par rapport à l'exécution des instructions de déviation.
